# EUROPÄISCHE PATENTSCHRIFT

(11) **EP 0 599 158 B1**
(45) Veröffentlichungstag und Bekanntmachung des Hinweises auf die Patenterteilung: **01.04.1998**
(21) Anmeldenummer: 93118374.3
(22) Anmeldetag: 12.11.1993
(51) Int. Cl.: B60R 21/16, D03D 1/02

(54) **Gassack für ein Rückhaltesystem in Fahrzeugen und Gewebe zu seiner Herstellung**
Airbag for a vehicle restraint system and fabric for its manufacture
Sac gonflable pour un système de retenue dans un véhicule et tissus pour sa fabrication

(30) Priorität: 27.11.1992 DE 4239978; 17.08.1993 DE 4327649
(43) Veröffentlichungstag der Anmeldung: 01.06.1994
(60) Teilanmeldung: 96107576.9
(73) Patentinhaber: TRW Occupant Restraint Systems GmbH, 73553 Alfdorf (DE)
(72) Erfinder: Ellerbrok, Norbert, D-73553 Alfdorf (DE)
(74) Vertreter: Degwert, Hartmut, Dipl.-Phys.

(56) Entgegenhaltungen:
- EP-A- 0 509 399
- WO-A-92/20847

## Beschreibung

Die Erfindung betrifft einen Gassack für ein Rückhaltesystem in Fahrzeugen, mit einer Wandung aus unbeschichtetem Gewebe.

Zur Vermeidung der bei herkömmlichen Gassack-Ausführungen aufgrund der Verwendung von innenseitig mit Butylkautschuk beschichteten Polyamidgeweben aufgetretenen Schwierigkeiten werden gemäß einem Vorschlag in der EP 0 454 213 A1 unbeschichtete Textilgewebe zur Herstellung von Gassäcken verwendet. Die erforderliche geringe Gasdurchlässigkeit des Gewebes kann durch Verdichtung erzielt werden, insbesondere durch Schrumpfen, Thermofixieren und Kalandrieren des Gewebes. Bei Verwendung von niedrigschrumpfenden Fäden im Gassackunterteil und von hochschrumpfenden Fäden im Gassackoberteil kann erreicht werden, daß nach dem Aufblasen des Gassacks die Gasdurchlässigkeit des Gassackunterteils größer ist als beim Gassackoberteil, so daß ein definiertes Ausströmen des Gases aus dem Gassack nach dem Aufprall des Fahrzeuginsassen erfolgt. Es hat sich jedoch gezeigt, daß die Gasdurchlässigkeit eines unbeschichteten Gewebes in der Serienfertigung sehr großen Schwankungen unterworfen ist. Daher müssen die Gewebeteile eines Gassacks, die voneinander verschiedene Gasdurchlässigkeitswerte aufweisen sollen, aus verschiedenen Gewebetypen hergestellt werden, insbesondere Gewebetypen mit verschiedener Fadendichte und aus unterschiedlich schrumpfenden Filamentgamtypen. Die Verwendung verschiedener Gewebetypen zur Herstellung eines Gassacks ist aber problematisch, da Nahtverbindungen zwischen verschiedenen Gewebetypen eine verminderte konstruktive Festigkeit aufweisen und in der Serienproduktion schwierig anzufertigen sind.

Diese Schwierigkeiten werden vermieden, wenn gemäß dem Vorschlag in der WO 92/20847 der Gassack durchgehend aus einem einheitlichen Textilmaterial gefertigt wird, wobei die Gasdurchlässigkeit variiert wird, indem selektiv Bindungspunkte ausgelassen werden.

Die Erfindung geht gemäß einem esten Aspekt aus von einem Gassack für ein Rückhaltesystem in Fahrzeugen, allgemein ballonförmig oder kissenförmig im aufgeblasenen Zustand und mit einer Wandung aus einem unbeschichteten Gewebe, die zwei Gewebeteile aufweist, von denen eines dem Fahrzeuginsassen zu- und das andere von ihm abgewandt ist, wobei beide Gewebeteile aus dem gleichen, durch Fadendichte und Filamentgarn bestimmten Gewebematerial bestehen, dessen in den verschiedenen Zonen unterschiedliche Gasdurchlässigkeit durch unterschiedliche Webparameter des Gewebematerials bestimmt ist. Ein ähnlicher Gassack ist aus der obengenannten WO 92/20847 bekannt. Gemäß der Erfindung ist vorgesehen, daß in Abhängigkeit vom Überdruck im Inneren des Gassacks während der Dauer seiner Expansion und anschließenden Kompression sowie bei einem mittleren Verhältnis von 1:1 zwischen der Spannung in Richtung der Kettfäden zur Spannung in Richtung der Schußfäden:
a) die Gasdurchlässigkeit des vom Fahrzeuginsassen abgewandten Gewebeteils bis zu einem Überdruck von höchstens etwa 20 kPa auf ein Maximum von mehr als 2 m³/s·m² anwächst und bis zu einem Überdruck von etwa 40 kPa zumindest nicht wesentlich zunimmt; und
b) die Gasdurchlässigkeit des dem Fahrzeuginsassen zugewandten Gewebeteils bis mindestens etwa 40 kPa auf höchstens etwa 1,5 m³/s·m² anwächst.

Gemäß einem zweiten Aspekt der Erfindung wird ausgegangen von einem Gassack für ein Rückhaltesystem in Fahrzeugen, mit einer Wandung aus einem unbeschichteten Gewebe, die drei Gewebeteile aufweist, von denen das erste im aufgeblasenen Zustand des Gassacks ein allgemein zylinderförmiges Mantelteil bildet und die zwei anderen Seitenteile bilden, wobei alle Gewebeteile aus dem gleichen, durch Fadendichte und Filamentgarn bestimmten Gewebematerial bestehen, dessen in den verschiedenen Zonen unterschiedliche Gasdurchlässigkeit durch unterschiedliche Webparameter des Gewebematerials bestimmt ist. Gemäß der Erfindung ist vorgesehen, daß in Abhängigkeit vom Überdruck im Inneren des Gassacks während der Dauer seiner Expansion und anschließenden Kompression:
a) die Gasdurchlässigkeit der Seitenteile bei einem mittleren Verhältnis von 1:1 zwischen der Spannung in Richtung der Kettfäden zur Spannung in Richtung der Schußfäden bis zu einem Überdruck von höchstens etwa 20 kPa auf ein Maximum von mehr als 2 m³/s·m² anwächst, und bis zu einem Überdruck von etwa 40 kPa zumindest nicht wesentlich zunimmt; und
b) die Gasdurchlässigkeit des Mantelteils bei einem mittleren Verhältnis von 2:1 oder 1:2 zwischen der Spannung in Richtung der Kettfäden zur Spannung in Richtung der Schußfäden bis mindestens etwa 40 kPa auf höchstens etwa 1,5 m³/s·m² anwächst.

Durch die Erfindung wird die Herstellung eines Gassacks aus unbeschichtetem Gewebematerial mit gut reproduzierbaren Gasdurchlässigkeitswerten ermöglicht, wobei für Gewebeteile mit verschiedenen Gasdurchlässigkeitswerten derselbe Gewebetyp verwendet werden kann, insbesondere ein Gewebematerial von zumindest annähernd gleicher Fadendichte und aus zumindest annähernd gleichem Filamentgarn. Die Erfindung beruht auf der Erkenntnis, daß die Gasdurchlässigkeit eines Gewebes in hohem Maße davon abhängt, wie hoch die im aufgeblasenen Gassack auftretenden Spannungen in Richtung der Kettfäden einerseits und in Richtung der Schußfäden andererseits sind. Zum einen besteht eine starke Abhängigkeit der Gasdurchlässigkeit vom Absolutwert der Spannung in der einen oder anderen Richtung; zum anderen besteht aber auch eine starke Abhängigkeit der Gasdurchlässigkeit vom Verhältnis der Spannung in Richtung der Kettfäden zur Spannung in Richtung der Schußfäden. Von diesen Erkenntnissen ausgehend wird erfindungsgemäß vorgeschlagen, daß für jedes Gewebematerial, aus dem die Gewebeteile des Gassacks hergestellt werden, die Gasdurchlässigkeit in Abhängigkeit von verschiedenen Werten des Verhältnisses der Spannung in Richtung der Kettfäden zur Spannung in Richtung der Schußfäden ermittelt wird. Gemäß herkömmlicher Technik wird die Gasdurchlässigkeit eines Gassackgewebes bei einer konstanten Druckdifferenz von 500 Pa gemessen. Die Erfindung stützt sich aber auf die weitere Erkenntnis, daß unbeschichtete Gassackgewebe unter dynamischen Bedingungen, die dem Aktivierungsfall des Gassack-Rückhaltesystems nahekommen, eine Gasdurchlässigkeit aufweisen können, die stark von den Werten abweicht, die aufgrund der bei konstanter Druckdifferenz erfolgten Messung erwartet werden. Daher werden bei der Ermittlung der Gasdurchlässigkeit des Gassackgewebes vorzugsweise die dynamischen Bedingungen simuliert, die bei der Aktivierung eines Gassack-Rückhaltesystems vorherrschen. In Abhängigkeit von der durch die Form des aufgeblasenen Gassacks bedingten Spannungsverteilung in den einzelnen Gewebeteilen wird die Orientierung der Kettfäden und der Schußfäden der Gewebeteile am aufgeblasenen Gassack so gewählt, daß für jedes Gewebeteil die vorgegebene Gasdurchlässigkeit bei dem in der Praxis erwarteten Druckdifferenzverlauf eingestellt ist. Unter Verwendung ein und desselben Gewebematerials, das durch Fadendichte und Filamentgarn bestimmt ist, jedoch verschiedene Webparameter wie Bindung, Ondulation und Ausrüstung aufweist, können so verschiedene Bereiche des Gassacks mit voneinander verschiedenen, gut reproduzierbaren Gasdurchlässigkeitswerten ausgestattet werden.

Die Spannungsverteilung in einem aufgeblasenen Gassack hängt von seiner Geometrie ab. Im Extremfall eines im aufgeblasenen Zustand kugelförmigen Gassacks beträgt das Spannungsverhältnis zwischen Kett- und Schußfäden 1:1, da die Spannungsverteilung gleichförmig ist. Die Orientierung der Kett- und Schußfäden am Gassack ist daher beliebig. Die Einstellung der Gasdurchlässigkeit für die verschiedenen Gewebeteile erfolgt durch gezielte Auswahl der Gewebebindung bei zumindest annähernd gleicher Fadendichte und annähernd gleichem Filametgarn des verwendeten Gewebetyps. Es wurde nämlich gefunden, daß bei einem gegebenen Gewebetyp und für gegebene Werte der Spannung in Richtung der Kettfäden und in Richtung der Schußfäden die Gasdurchlässigkeit in hohem Maße und mit guter Reproduzierbarkeit durch die Art der Gewebebindung beeinflußt werden kann. Die sich für die verschiedenen Gewebebindungsarten ergebenden Abhängigkeiten der Gasdurchlässigkeit von der Spannung in Richtung der Kettfäden und der Spannung in Richtung der Schußfäden werden systematisch durch Webparameter sowie ausrüstungstechnische Parameter bestimmt.

Im entgegengesetzten Extremfall eines im aufgeblasenen Zustand zylinderförmigen Gassacks beträgt das Spannungsverhältnis im Mantelteil 2:1 zwischen Umfangsrichtung und Axialrichtung sowie 1:1 in den Basisflächen. Auch in diesem Falle können alle Teile des Gassacks aus demselben Textilmaterial gefertigt werden. Unter der Voraussetzung, daß die Gasdurchlässigkeit der Seitenteile wesentlich größer sein soll als die des Mantelteils, werden entweder die Kettfäden oder die Schußfäden des Mantelteils in Umfangsrichtung des aufgeblasenen Gassacks orientiert. In den Seitenteilen ist hingegen die Orientierung von Kett- und Schußfäden beliebig, da hier das Spannungsverhältnis 1:1 beträgt. Die Wahl des Gewebematerials und der Orientierung von Kett- und Schußfäden im Mantelteil erfolgt anhand eines Diagrammes, welches die Gasdurchlässigkeit in Abhängigkeit von der Spannung für verschiedene Verhältnisse der Spannung in Richtung der Kettfäden zur Spannung in Richtung der Schußfäden zeigt.

Gemäß einer besonders vorteilhaften Weiterbildung der Erfindung besteht zumindest ein Teil des zur Herstellung des Gewebematerials verwendeten Filamentgarns aus Hohlfasern. Durch die Verwendung von Hohlfasern läßt sich die Abhängigkeit der Gasdurchlässigkeit des Gewebes von den Spannungsverhältnissen in hohem Maße beeinflussen. Hohlfasern können unter Druck in stärkerem Maße abgeflacht werden als Fasern aus Vollmaterial. Die Abflachung des Filametgarns unter Druckeinwirkung ist aber eine der Ursachen für die sich mit der Spannung in Richtung der Kett- oder Schußfäden ändernde Gasdurchlässigkeit. Ein Gewebe, dessen Filamentgarn zumindest teilweise aus Hohlfasern besteht, kann durch Variation der Gewebebindung in seinem Gasdurchlässigkeitsverhalten an die verschiedensten Einsatzbedingungen angepaßt werden, so daß trotz der Verwendung ein und desselben Gewebetyps stark unterschiedliche Gasdurchlässigkeitswerte erzielt werden.

Weitere Merkmale und Vorteile der Erfindung ergeben sich aus der nun folgenden Beschreibung und aus der Zeichnung, auf die Bezug genommen wird. In der Zeichnung zeigen:
- Fig. 1a, 1b und 1c: Diagramme, welche die Gasdurchlässigkeit in Abhängigkeit von der Spannung für verschiedene Verhältnisse der Spannung in Richtung der Kettfäden zur Spannung in Richtung der Schußfäden für verschiedene Textilgewebe zeigen, die von annähernd gleicher Fadendichte sind und aus gleichem oder annähernd gleichem Filamentgarn bestehen;
- Fig. 2a und 2b: einen im aufgeblasenen Zustand annähernd ballonförmigen Gassack in Seitenansicht und in einer Ansicht von der Seite des Gasgenerators her;
- Fig. 3: eine schematische Perspektivansicht eines im aufgeblasenen Zustand annähernd zylinderförmigen Gassacks;
- Fig. 4: ein Doppelbelichtungsinterferogramm zur Veranschaulichung der Spannungszustände in der Wandung eines aufgeblasenen Gassacks;
- Fig. 5: eine schematische Perspektivansicht eines im aufgeblasenen Zustand allgemein kissenförmigen Gassacks;
- Fig. 6a und 6b: schematische Perspektivansichten einer Hohlfaser im unbelasteten und im belasteten Zustand;
- Fig. 7a und 7b: schematische Schnittansichten eines Textilgewebes zur Veranschaulichung der Verformung eines aus Hohlfasern bestehenden Filamentgarns unter Druckeinwirkung im Vergleich zu einem Textilgewebe aus Vollmaterialfasern; und
- Fig. 8a und 8b: Diagramme, in denen die Gasdurchlässigkeitswerte zweier Gewebe in Abhängigkeit vom Differenzdruck bei verschiedenen Spannungsverhältnissen und unter dynamischen Bedingungen dargestellt sind; und
- Fig. 8c: ein Diagramm, das die Gesamt-Gasdurchlässigkeit eines idealen Gassacks unter dynamischen Bedingungen zeigt.

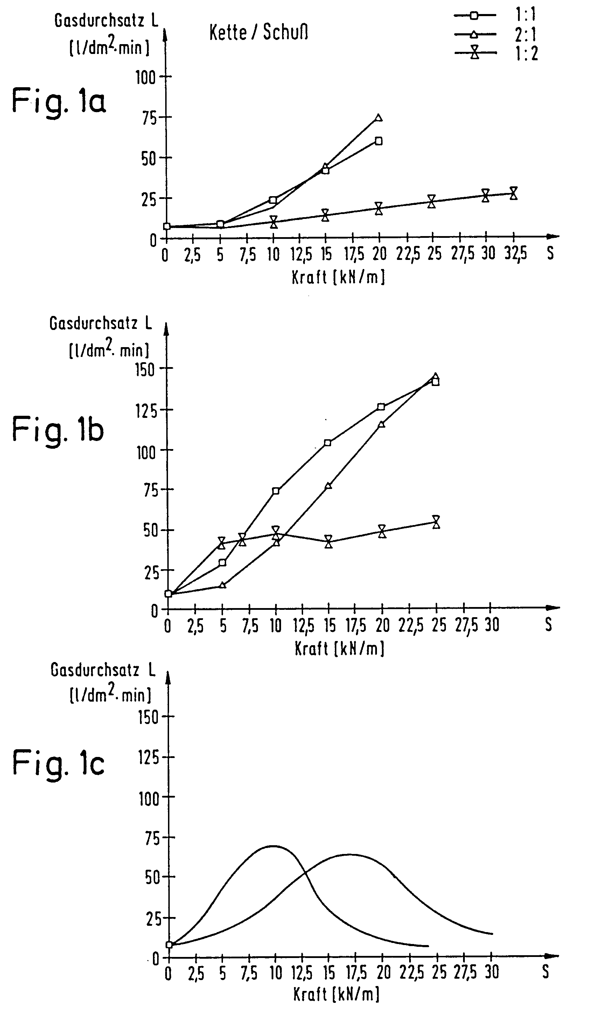

Die Diagramme der Figuren 1a und 1b zeigen die Ergebnisse systematischer Untersuchungen an zwei Gewebeproben. Beide Gewebeproben sind unbeschichtet und aus dem gleichen Filamentgarntyp, unterscheiden sich aber in der Gewebebindung.

In den Diagrammen der Figuren 1a und 1b ist die Gasdurchlässigkeit L für einen Differenzdruck von 500 Pa in Abhängigkeit von der auf das Gewebe ausgeübten Zugkraft S für drei verschiedene Parameter dargestellt, nämlich für drei verschiedene Werte des Verhältnisses der Spannung in Richtung der Kettfäden zur Spannung in Richtung der Schußfäden. Es zeigt sich, daß die Gasdurchlässigkeit in hohem Maße von diesem Verhältnis abhängt und insbesondere die Zunahme der Gasdurchlässigkeit L bei zunehmender Zugkraft S für verschiedene Werte des Spannungsverhältnisses sehr verschieden ist. Eei der ersten Gewebeprobe (Fig. 1a) steigt die Gasdurchlässigkeit bei einem Spannungsverhältnis von 1:2 nur wenig an und bleibt auch bei einer Zugkraft von über 30 kN/m noch unterhalb von etwa 30 l/dm²·min. Bei einem Spannungsverhältnis von 1:1 erreicht die Gasdurchlässigkeit L hingegen für eine Kraft von etwa 20 kN/m bereits einen Wert von etwa 60 l/dm²·min. Noch stärker wächst die Gasdurchlässigkeit an, wenn die Spannung in Richtung der Kettfäden den doppelten Wert der Spannung in Richtung der Schußfäden hat. Insgesamt aber ist bei dieser Gewebeprobe die Gasdurchlässigkeit relativ gering.

Die zweite Gewebeprobe (Fig. 1b) zeigt für die Spannungsverhältnisse 1:1 und 2:1 eine wesentlich größere Gasdurchlässigkeit, die Werte von weit über 100 l/dm²·min erreicht. Bei einem Spannungsverhältnis von 1:2 wächst hingegen die Gasdurchlässigkeit kaum über einen Wert von etwa 50 l/dm²·min an.

In Fig. 1b ist bereits ersichtlich, daß die Kurve der Gasdurchlässigkeit nicht stetig ansteigen muß; durch geeignete Wahl der Gewebebindung und der Einarbeitung kann der Kurvenverlauf so eingestellt werden, daß die Gasdurchlässigkeit bei mittleren Werten der Zugkraft S, also bei etwa 10 kN/m, einen Maximalwert erreicht und anschließend abnimmt. Dieser Effekt kann ausgenutzt werden, um die Härte des Gassacks an die Stärke des Aufpralls anzupassen. Bei hohem Innendruck des Gassacks, entsprechend einer großen Masse des zu schützenden Fahrzeuginsassen oder einem harten Aufprall, wird die Luftsackhärte stetig vergrößert; bei geringerem Innendruck strömt das Gas schneller ab, so daß der Gassack relativ weich bleibt. Das Gewebe, aus dem der Gassack besteht, wirkt also als Regelelement, durch welches die Härte des Gassacks optimal an die jeweiligen Verhältnisse angepaßt werden kann.

In dem Diagramm der Fig. 1c sind zwei die Gasdurchlässigkeit in Abhängigkeit von der Zugkraft wiedergebende Kurven gezeigt, mit denen eine noch ausgeprägtere Regelfunktion des Gassacks nach demselben Prinzip erreicht werden kann. Für eine gegebene Fadendichte und einen gegebenen Filamentgarntyp kann der gewünschte Kurvenverlauf durch die Wahl der Gewebebindung und - ausrüstung sowie der Einarbeitung von Kette und Schuß eingestellt werden.

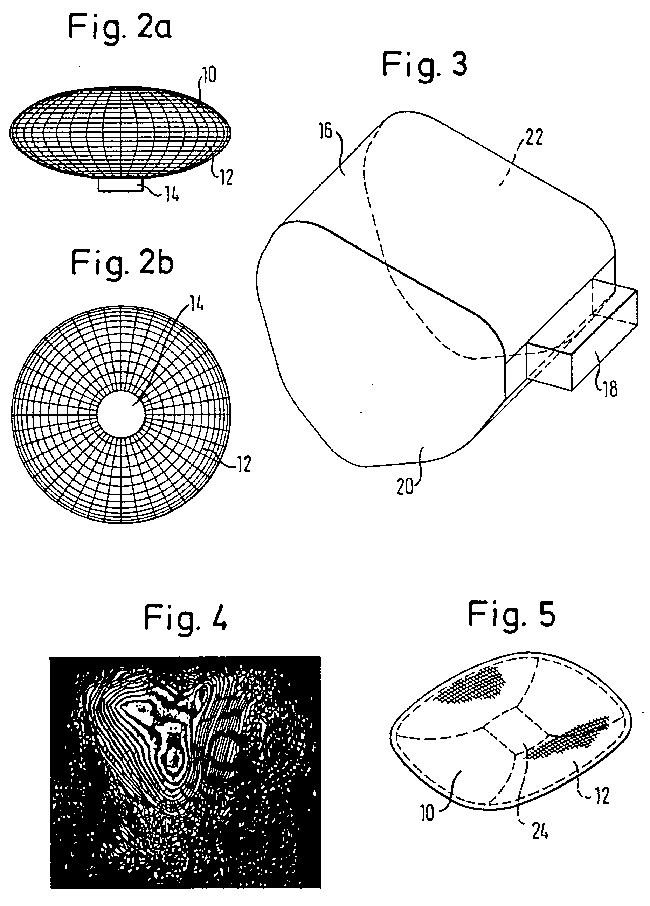

Der in den Figuren 2a und 2b gezeigte Gassack ist im aufgeblasenen Zustand allgemein ballonförmig und besteht aus einem Oberteil 10 sowie einem Unterteil 12, das eine mittige Öffnung für den Anschluß an einen Gasgenerator 14 aufweist. Bei einer solchen Ballonform des Gassacks ist die Spannungsverteilung in der Gassackwandung weitgehend gleichförmig. Die Orientierung von Kette und Schuß ist daher bei den für das Oberteil 10 und das Unterteil 12 verwendeten Gewebeteilen beliebig. Das dem Fahrzeuginsassen zugewandte Oberteil 10 soll von geringer Gasdurchlässigkeit sein, um eine Verletzung des Fahrzeuginsassen durch Partikel und heiße Gase zu vermeiden. Zu diesem Zweck sollte die Gasdurchlässigkeit des Unterteils 12 mindestens doppelt so groß sein wie die des Oberteils 10. Für eine problemlose Serienfertigung des Gassacks ist es wesentlich, daß die Gewebeteile, aus denen Oberteil 10 und Unterteil 12 angefertigt werden, von annähernd gleicher Beschaffenheit und insbesondere von zumindest annähernd gleicher Fadendichte sind. Die Gewebeteile werden an ihrem Außenrand miteinander vernäht. Wegen der gleichen Fadendichte beider Gewebeteile ist die Naht leicht anzufertigen und von hoher Strukturfestigkeit.

Wegen der Ballonform des Gassacks nach den Figuren 2a und 2b ist in den Diagrammen der Figuren 1a und 1b die Kurve für das Spannungsverhältnis 1:1 maßgeblich. Für das Oberteil wird das Textilmaterial der ersten Gewebeprobe (Fig. 1a) gewählt. Dessen Gasdurchlässigkeit liegt für einen Spannungsbereich von 5 bis 20 kN/m zwischen etwa 5 und 60 l/dm²·min. Für das Unterteil 12 wird ein Textilmaterial gemäß der zweiten Gewebeprobe (Fig. 1b) verwendet. Bei diesem liegt die Gasdurchlässigkeit für das Spannungsverhältnis 1:1 und einem Zugspannungsbereich von 5 bis 20 kN/m zwischen etwa 27 und 125 l/dm²·min. Innerhalb des gesamten, für praktische Verhältnisse relevanten Spannungsbereiches ist somit die Gasdurchlässigkeit des Unterteils 12 mehr als doppelt so groß wie die des Oberteils 10.

Fig. 3 zeigt einen im aufgeblasenen Zustand allgemein zylinderförmigen Gassack für ein beifahrerseitiges Gassack-Rückhaltesystem. Der Gassack besteht aus einem Mantelteil 16, an dem der Anschluß für einen rechteckigen Gasgenerator 18 gebildet ist, und aus zwei Seitenteilen 20, 22. Aufgrund der Zylinderform des Gassacks ist in dem Mantelteil 16 die Spannung in Umfangsrichtung doppelt so groß wie in Axialrichtung. In den Seitenteilen 20, 22 ist hingegen die Spannungsverteilung gleichförmig. Das dem Insassen zugewandte Mantelteil 16 soll eine wesentlich geringere Gasdurchlässigkeit als die beiden Seitenteile 20, 22 aufweisen, damit Verletzungen des Insassen durch Partikel und heiße Gase vermieden werden. Bei dieser Ausführung des Gassacks können das Mantelteil 16 und die beiden Seitenteile 20, 22 aus demselben Textilmaterial hergestellt werden. Bei Verwendung des Materials gemäß Gewebeprobe 1 (Fig. 1a) ist die Orientierung von Kett- und Schußfäden in den Seitenteilen 20, 22 beliebig. Aufgrund des Spannungsverhältnisses von annähernd 1:1 ergibt sich dann eine Gasdurchlässigkeit im Bereich von etwa 5 bis 60 l/dm²·min für eine Zugkraft im Bereich von etwa 5 bis 20 kN/m. Im Mantelteil 16 muß das Spannungsverhältnis 1:2 zwischen Kette und Schuß betragen. Für dieses Verhältnis ist dem Diagramm für den genannten Zugspannungsbereich eine Gasdurchlässigkeit im Bereich von etwa 3 bis 20 l/dm²·min zu entnehmen. Damit das Verhältnis der Spannung in Richtung der Kettfäden zur Spannung in Richtung der Schußfäden etwa 1:2 beträgt, müssen im Mantelteil die Schußfäden in Umfangsrichtung und die Kettfäden in Axialrichtung orientiert sein.

Wenn für das Mantelteil 16 ein Textilgewebe gewählt wird, bei dem die Gasdurchlässigkeit für ein Spannungsverhältnis von 2:1 zwischen Kette und Schuß kleiner ist als für ein Spannungsverhältnis von 1:2, so müssen die Kettfäden in Umfangsrichtung und die Schußfäden in Axialrichtung orientiert sein.

Bei einfachen geometrischen Formen des Gassacks ist die Spannungsverteilung in den Teilen seiner Wandung aufgrund von geometrischen Überlegungen leicht zu bestimmen. Bei komplexeren Formen ist es vorteilhaft, die Spannungsverteilung durch eine optische Abbildungstechnik zu visualisieren, insbesondere durch eine holographische, eine Moiré- oder eine Speckle-Technik. Fig. 4 zeigt ein Doppelbelichtungsinterferogramm von der Oberfläche eines aufgeblasenen Gassacks. Aus dem Linienmuster lassen sich Rückschlüsse auf die Spannungsverteilung ziehen.

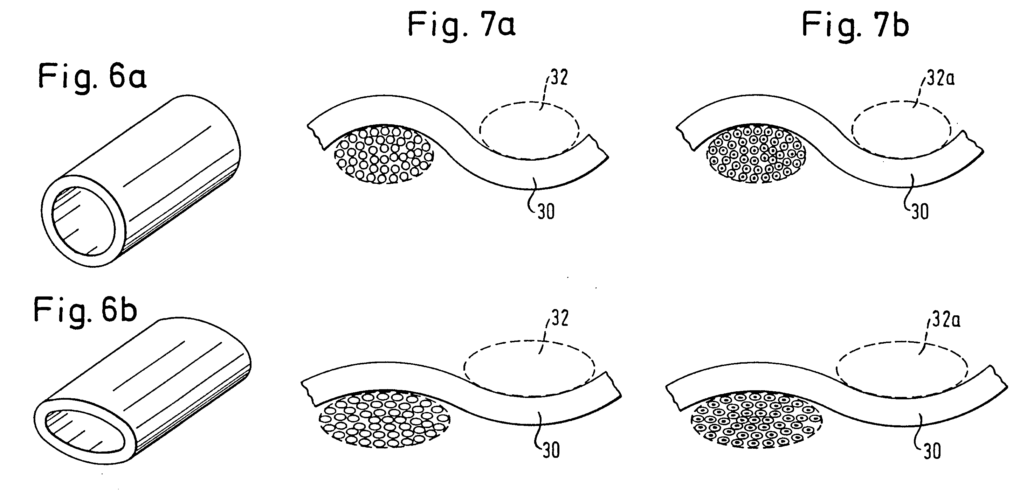

Die in Fig. 5 schematisch gezeigte Ausführung eines Gassacks ist im aufgeblasenen Zustand allgemein kissenförmig. Dieser Gassack besteht ähnlich wie der nach den Figuren 2a und 2b aus einem Oberteil 10 und einem mit diesem an seinem Außenrand vernähten Unterteil 12. In der Mitte des Unterteils 12 befindet sich eine rechteckförmige Anschlußöffnung 24 für einen Gasgenerator. In erster Näherung kann angenommen werden, daß die Spannungsverteilung im Oberteil 10 die gleiche wie im Unterteil 12 ist. Sowohl bei Oberteil 10 als auch bei Unterteil 12 werden die Kettfäden in Längsrichtung und die Schußfäden in Querrichtung der Kissenform orientiert; wegen der annähernd gleichförmigen Spannungsverteilung kann die Orientierung aber beliebig sein. Das Spannungsverhältnis zwischen Kettfäden und Schußfäden beträgt jeweils etwa 1: 1. Für das Oberteil, das eine geringere Gasdurchlässigkeit aufweisen soll als das Unterteil, wird ein Textilmaterial gemäß der ersten Gewebeprobe (Fig. 1a) gewählt; für das Unterteil 12 wird ein Textilmaterial gemäß der zweiten Gewebeprobe (Fig. 1b) gewählt. Die Verhältnisse sind in etwa vergleichbar mit denen bei der Ausführungsform nach den Figuren 2a und 2b.

Durch Verwendung eines besonderen Fasertyps, nämlich einer Hohlfaser, läßt sich das Verhalten des Gewebes bezüglich seiner Gasdurchlässigkeit in hohem Maße steuern. Fig. 6a zeigt eine solche Hohlfaser schematisch und stark vergrößert im unbelasteten Zustand. Fig. 6b zeigt dieselbe Hohlfaser im belasteten Zustand. Sie ist im belasteten Zustand abgeflacht und folglich verbreitert.

Die Auswirkungen der Verwendung einer solchen Faser sind in den Figuren 7a und 7b veranschaulicht. In Fig. 7a wird angenommen, daß die Kettfäden 30 und die Schußfäden 32 aus üblichem Filamentgarn bestehen, das aus runden Vollmaterial-Fasern aufgebaut ist. Unter der Annahme, daß die Kettfäden 30 eine höhere Einarbeitung als die Schußfäden 32 aufweisen und auch unter einer höheren Zugspannung stehen, ergibt sich eine höhere Konstruktionsdehnung in Kettrichtung, da die Ondulation aus den Kettfäden 30 herausgezogen wird, bevor die Materialdehnung des Fadens eintritt. Einer Materialdehnung der Schußfäden 32 wirkt die erhöhte Ondulation in Schußrichtung entgegen, die durch die höhere Zuglast in Kettrichtung hervorgerufen wird. Durch die starke Ondulation der Kettfäden 30 sind die Schußfäden 32 seitlich abgestützt und werden daher nur in geringem Maße abgeflacht, d.h. verbreitert. Die Verbreiterung der Fäden hat andererseits eine Verminderung der für den Gasdurchtritt verfügbaren Querschnittsfläche zur Folge.

In Fig. 7b ist angenommen, daß zumindest die Schußfäden 32a aus einem Filamentgarn bestehen, das mittels der in Fig. 6a und 6b symbolisch dargestellten Hohlfaser aufgebaut ist. Diese Hohlfasern neigen in höherem Maße zu einer Abflachung und folglich Verbreiterung unter Last als die in Fig. 7a vorausgesetzten Vollmaterial-Fasern. Unter ansonsten gleichen Verhältnissen tritt daher eine stärkere Verbreiterung der Schußfäden 32a ein. Die Steuerung der Gasdurchlässigkeit des Gewebes durch die Einarbeitung ist daher stärker ausgeprägt als bei Fig. 7a.

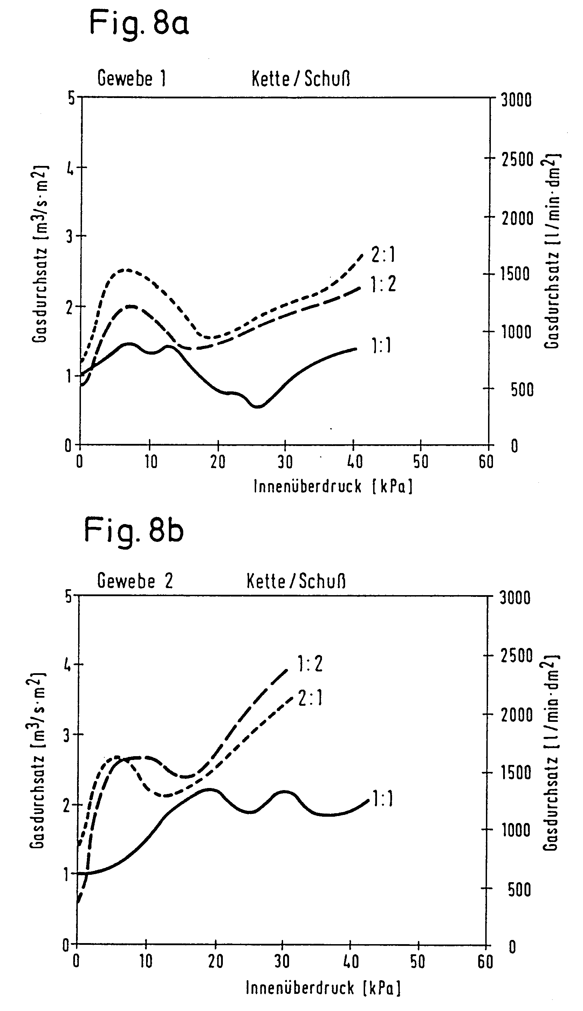

In Figuren 8a und 8b sind für zwei Gewebearten, die mit "Gewebe 1" und "Gewebe 2" bezeichnet sind, die Gasdurchlässigkeitswerte bei verschiedenen Verhältnissen der Spannung in Richtung der Kettfäden zur Spannung in Richtung der Schußfäden in Abhängigkeit vom Innenüberdruck dargestellt.

Bei der Aktivierung eines Gassacks sind folgende Phasen zu unterscheiden:
a) eine Anfangsphase, in der nach Aktivierung des Gasgenerators der Gassack entfaltet und bis zu seiner vollständigen Ausdehnung aufgefüllt wird;
b) eine Hauptphase, in der nach vollständiger Ausdehnung des Gassacks Kopf und Brust des Fahrzeuginsassen in den Gassack eintauchen;
c) eine Endphase, in der die Gase aus dem Gassack entweichen.

Mit üblichen Gasgeneratoren ist die Anfangsphase innerhalb von 40 bis 60 ms abgeschlossen. Der Ablauf der Hauptphase wird durch zahlreiche Parameter bestimmt, insbesondere den Unfallablauf, den Fahrzeugtyp sowie Größe und Gewicht des Fahrzeuginsassen. Der Innenüberdruck des Gassacks ändert sich während des gesamten Ablaufs ständig. In der Anfangsphase steigt er beispielsweise auf einen Wert von etwa 10 bis 20 kPa an. In der anschließenden Hauptphase kann der Innenüberdruck durch das plötzliche Eintauchen des Fahrzeuginsassen in den Gassack erheblich zunehmen, beispielweise auf Werte von 40 kPa oder mehr. Die Endphase ist für diese Betrachtungen nur insofern von Interesse, als durch ihre Ausdehnung die Dauer der Schutzwirkung verlängert wird. Während der Anfangs- und der Hauptphase ist für die Schutzwirkung des Gassacks seine Gasdurchlässigkeit in Abhängigkeit vom Innenüberdruck von großer Bedeutung. Diese Abhängigkeit ist in den Fig. 8a und 8b dargestellt, in denen die Abszisse, auf welcher die Überdruckwerte aufgetragen sind, nicht mit der Zeitachse zu verwechseln ist. Die Druckbeaufschlagung erfolgt aber mit einem Druckimpuls, der den Verhältnissen bei der Aktivierung eines Gassacks nachgebildet ist, denn die Gasdurchlässigkeitswerte können unter dynamischen Bedingungen stark von den statisch ermittelten Werten abweichen. Die Figuren 8a und 8b zeigen also das dynamische, innendruckabhängige Verhalten des Gewebes hinsichtlich seiner Gasdurchlässigkeit bei verschiedenen Spannungsverhältnissen, die durch die geometrische Form des Gassacks im aufgeblasenen Zustand bedingt sind.

Beide Diagramme zeigen den Gasdurchsatz durch das Gewebematerial bei ansteigendem Druck, also während der Anfangs- und der Hauptphase. Bei abnehmendem Druck in der Endphase ist der Gasdurchsatz, besonders bei niedrigen Druckwerten, wesentlich geringer, wodurch die Dauer der Schutzwirkung verlängert wird.

Bei dem Gewebe 1 steigt für das Spannungsverhältnis 1:1 der Gasdurchsatz bei anwachsendem Innenüberdruck nur wenig an und bleibt unter einem Wert von 1000 l/min·dm². Bei einem Innenüberdruck von 20 kPa, bei dem das Eintauchen des Fahrzeuginsassen in den Gassack erfolgt ist oder erwartet wird, liegt der Gasdurchsatz nur wenig über 500 l/min·dm². Das Gewebe ist also nahezu gasundurchlässig. Auch bei den Spannungsverhältnissen 2:1 und 1:2 liegt die Gasdurchlässigkeit für einen Innenüberdruck von 20 kPa so niedrig, daß von einem praktisch gasundurchlässigen Gewebe gesprochen werden kann. Bemerkenswert ist vor allem das starke Absinken des Gasdurchsatzes bei einem Innenüberdruck von mehr als 10 kPa. Das Gewebe 1 eignet sich also für diejenigen Teile des Gassacks, die dem Fahrzeuginsassen zugewandt sind und eine geringe Gasdurchlässigkeit aufweisen sollen. Optimal ist seine Verwendung mit dem Spannungsverhältnis 1:1.

Das Gewebe 2 zeigt im Gegensatz zu dem Gewebe 1 eine mit zunehmendem Innenüberdruck überproportional zunehmende Gasdurchlässigkeit im Bereich bis etwa 20 kPa, wobei der Effekt bei dem Spannungsverhältnis 1:1 zwischen 10 und 20 Pa und bei den Spannungsverhältnissen 1:2 sowie 2:1 zwischen 0 und 10 kPa besonders stark ausgeprägt ist. Das Gewebe 2 "öffnet" sich also mit zunehmendem Innenüberdruck, während das Gewebe 1 bei zunehmendem Innenüberdruck tendenziell "schließt". Das Gewebe 2 eignet sich also für diejenigen Teile eines Gassacks, die von dem Fahrzeuginsassen abgewandt sind und eine größere Gasdurchlässigkeit aufweisen sollen.

Bei einem ballonförmigen Gassack, der aus zwei kreisrunden Gewebeteilen zusammengesetzt ist, wie in Fig. 2a und 2b veranschaulicht ist, wird das dem Fahrzeuginsassen zugewandte Oberteil aus dem Gewebe 1 und das Unterteil aus dem Gewebe 2 gefertigt. In beiden Gewebeteilen herrscht eine symmetrische Spannungsverteilung aufgrund der geometrischen Gestalt des Gassacks.

Bei einem allgemein zylinderförmigen Gassack, wie in Fig. 3 gezeigt, wird der Mantelteil bei einem Spannungsverhältnis von 1:2 oder 2:1 aus dem Gewebe 1 hergestellt, und für die Seitenteile wird das Gewebe 2 verwendet.

Bei einer kissenförmigen Ausführung des Gassacks, wie in Fig. 5 veranschaulicht, wird das dem Insassen zugewandte Oberteil aus dem Gewebe 1 bei dem Spannungsverhältnis 1:2 oder 2:1 gefertigt, und für das Unterteil wird das Gewebe 2 verwendet.

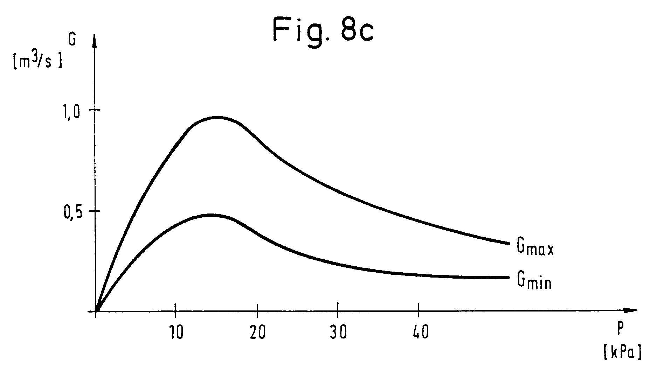

Die Fig. 8c zeigt ein Diagramm, worin der gesamte Gasdurchsatz durch die Wandung eines Gassacks in Abhängigkeit vom Überdruck dargestellt ist. Bei einem idealen Gassack liegt die Kurve der Gasdurchlässigkeit zwischen einer oberen Kurve Gₘₐₓ und einer unteren Kurve Gₘᵢₙ in Fig. 8c. Diese beiden Kurven bilden einen Korridor, worin die Gasdurchlässigkeitskurve eines idealen Gassacks liegen sollte. Die in Fig. 8c gezeigten Kurven sind wie folgt zu interpretieren: Bei der Entfaltung des Gassacks wird in seinem Inneren ein Überdruck aufgebaut, der schnell anwächst und bereits nach wenigen Millisekunden zur vollständigen Entfaltung des Gassacks führt. Die sogenannte Füllzeit hängt von der Größe des Gassacks ab und beträgt zwischen etwa 20 und etwa 35 ms. Der Überdruck im Inneren des Gassacks erreicht ein Maximum, wenn der Fahrzeuginsasse in den Gassack eintaucht. Die wirksame Härte des Gassacks wird durch die Gasdurchlässigkeit seiner Wandung in Abhängigkeit vom jeweiligen Überdruck bestimmt. In der Anfangsphase des Überdruckaufbaus sollte der Gassack weich sein, um bei einem leichten Aufprall das Verletzungsrisiko zu minimieren. Bei hohen Überdruckwerten liegt ein harter Aufprall vor, beispielsweise bei einem nicht angegurteten Fahrzeuginsassen. Damit dieser den Gassack nicht durchschlägt, muß der Gassack hart sein. Mit dem in Fig. 8c gezeigten Verlauf der Gasdurchlässigkeitswerte in Abhängigkeit vom Überdruck wird das angestrebte, selbstregelnde Verhalten des Gassacks erreicht. Für den optimalen Verlauf der Gasdurchlässigkeitskurve zwischen den Kurven Gₘₐₓ und Gₘᵢₙ sind mehrere Parameter bestimmend, insbesondere: Fahrzeugtyp, Druckgasgenerator, Größe und Form des Gassacks sowie die herrschende Temperatur.

Es wurde nun gefunden, daß die ideale Gasdurchlässigkeitskurve des gesamten Gassacks mit einer Gassackwandung aus einem unbeschichteten Textilgewebe erzielt werden kann, was mit herkömmlichem Fachwissen nicht in Einklang gebracht werden kann. Nach herkömmlicher Technik wird die Eignung eines Gewebes für einen Gassack anhand seiner Gasdurchlässigkeit bestimmt, die statisch bei einem fest vorgegebenen Differenzdruck von 500 Pa bestimmt wird. Es wird also erwartet, daß der Gasdurchsatz durch das Gewebe linear von der Druckdifferenz abhängt. Eine linear mit dem Druck zunehmende Gasdurchlässigkeit wäre in dem Diagramm nach Fig. 8c durch eine Gerade darzustellen, die durch den Nullpunkt verläuft. Die ideale Gasdurchlässigkeitskurve, die zwischen den Kurven Gₘₐₓ und Gₘᵢₙ in Fig. 8c verläuft, läßt sich hingegen wie folgt definieren:
a) bis zu einem Überdruck etwa 10 kPa wächst die Gasdurchlässigkeit mit anwachsendem Druck auf einen Wert zwischen etwa 0,5 und etwa 1,0 m³/s an;
b) zwischen den Überdruckwerten von etwa 10 und etwa 20 kPa wächst die Gasdurchlässigkeit weiter an bis zu einem Maximalwert und nimmt anschließend ab;
c) oberhalb eines Überdrucks von etwa 20 kPa in einem Bereich bis mindestens etwa 40 kPa erfolgt keine wesentliche Zunahme der Gasdurchlässigkeit.

Oberhalb eines Überdrucks von 20 kPa und in einem Bereich bis mindestens etwa 40 kPa besteht vorzugsweise eine abnehmende Tendenz der Gasdurchlässigkeit. Man sieht auch, daß die Gasdurchlässigkeitskurve oberhalb eines Überdruckwertes von etwa 20 kPa vorzugsweise einen Wendepunkt durchläuft. Schließlich nimmt die Gasdurchlässigkeit bis zu einem Überdruckwert von 10 kPa vorzugsweise stärker als linear zu.

Ein unbeschichtetes Textilgewebe, das die geforderte Gasdurchlässigkeit aufweist, kann durch die gezielte Auswahl von herkömmlichen Webparametern geschaffen werden. Wesentlich ist, daß bei der Bestimmung der Gasdurchlässigkeit eines Gewebes dynamisch vorgegangen wird und die Spannungsverhältnisse am aufgeblasenen Gassack berücksichtigt werden. Da der gesamte Vorgang der Expansion und Kompression des Gassacks innerhalb einer Zeitspanne von etwa 100 bis 150 ms abgeschlossen ist, muß die experimentelle Bestimmung der Gasdurchlässigkeit eines Gewebes mit einem Druckimpuls erfolgen, der innerhalb einer vergleichbaren Zeitspanne die auftretenden Überdruckwerte erreicht.

Da der Gassack vorzugsweise in seinem dem Fahrzeuginsassen zugewandten Bereich eine geringe Gasdurchlässigkeit aufweist, muß der sich aus Fig. 8c ergebende Verlauf der Gasdurchlässigkeitskurve durch das Gewebe in den anderen Gassackbereichen erzielt werden. Wenn der Gassack aus verschiedenen Gewebeteilen zusammengesetzt ist, müssen die dem Insassen zugewandten Gewebeteile eine geringere Gasdurchlässigkeit als die von ihm abgewandten Gewebeteile aufweisen. Die sich aus Fig. 8c ergebende Gasdurchlässigkeitskurve ist dann die Summe der zwei Gasdurchlässigkeitskurven der verwendeten Gewebeteile. Der dem Fahrzeuginsassen zugewandte Gewebeteil ist vorzugsweise "gasddicht", d.h. seine Gasdurchlässigkeit wächst bei einseitiger Druckbeaufschlagung während einer Dauer von etwa 100 ms mit zunehmendem Druck zumindest oberhalb eines Wertes von etwa 10 kPa und bis mindestens etwa 40 kPa höchstens unwesentlich an; vorzugsweise nimmt sie sogar beträchtlich ab. Unter diesen Voraussetzungen kann ein unbeschichtetes Gewebe verwendet werden, dessen Gasdurchlässigkeit bei statischer Druckbeaufschlagung mit einer Druckdifferenz von 500 PA mehr als 12 l/min·dm² beträgt, z. B. 15 - 18 l/min·dm².

Um den gewünschten Verlauf der Gasdurchlässigkeitskurve bei einem herkömmlichen unbeschichteten Textilgewebe aus Polyamid(PA)- oder Polyester(PES)-Fasern zu erreichen, werden insbesondere die folgenden Parameter gezielt ausgewählt: Fadendichte, Fadentyp (Polymerisat und Schrumpfverhalten), Gewebebindung, Ondulation und Ausrüstung. Ein geeignetes herkömmliches Textilgewebe aus Polyamidfasern mit einem Heißluftschrumpf von ca. 5% hat eine Fadendichte von 350 dtex. Um die Konfektionierung des Gassacks wesentlich zu vereinfachen, wenn er aus verschiedenen Gewebeteilen zusammengesetzt ist, wird trotz des völlig verschiedenen Gasdurchlässigkeitsverhaltens der verschiedenen Gewebeteile stets derselbe, durch Fadendichte und Fadentyp bestimmte Gewebetyp verwendet.

## Patentansprüche

1. Gassack für ein Rückhaltesystem in Fahrzeugen, allgemein ballonförmig oder kissenförmig im aufgeblasenen Zustand und mit einer Wandung aus einem unbeschichteten Gewebe, die zwei Gewebeteile aufweist, von denen eines dem Fahrzeuginsassen zu- und das andere von ihm abgewandt ist, wobei beide Gewebeteile aus dem gleichen, durch Fadendichte und Filamentgarn bestimmten Gewebematerial bestehen, dessen in den verschiedenen Zonen unterschiedliche Gasdurchlässigkeit durch unterschiedliche Webparameter des Gewebematerials bestimmt ist, dadurch gekennzeichnet, daß in Abhängigkeit vom Überdruck im Inneren des Gassacks während der Dauer seiner Expansion und anschließenden Kompression sowie bei einem mittleren Verhältnis von 1:1 zwischen der Spannung in Richtung der Kettfäden zur Spannung in Richtung der Schußfäden:
a) die Gasdurchlässigkeit des vom Fahrzeuginsassen abgewandten Gewebeteils bis zu einem Überdruck von höchstens etwa 20 kPa auf ein Maximum von mehr als 2 m³/s·m² anwächst und bis zu einem Überdruck von etwa 40 kPa nicht wesentlich zunimmt; und
b) die Gasdurchlässigkeit des dem Fahrzeuginsassen zugewandten Gewebeteils bis mindestens etwa 40 kPa auf höchstens etwa 1,5 m²/s·m² anwächst.

2. Gassack für ein Rückhaltesystem in Fahrzeugen, mit einer Wandung aus einem unbeschichteten Gewebe, die drei Gewebeteile aufweist, von denen das erste im aufgeblasenen Zustand des Gassacks ein allgemein zylinderförmiges Mantelteil bildet und die zwei anderen Seitenteile bilden, wobei alle Gewebeteile aus dem gleichen, durch Fadendichte und Filamentgarn bestimmten Gewebematerial bestehen, dessen in den verschiedenen Zonen unterschiedliche Gasdurchlässigkeit durch unterschiedliche Webparameter des Gewebematerials bestimmt ist, dadurch gekennzeichnet, daß in Abhängigkeit vom Überdruck im Inneren des Gassacks während der Dauer seiner Expansion und anschließenden Kompression:
a) die Gasdurchlässigkeit der Seitenteile bei einem mittleren Verhältnis von 1:1 zwischen der Spannung in Richtung der Kettfäden zur Spannung in Richtung der Schußfäden bis zu einem Überdruck von höchstens etwa 20 kPa auf ein Maximum von mehr als 2 m³/s·m² anwächst, und bis zu einem Überdruck von etwa 40 kPa nicht wesentlich zunimmt; und
b) die Gasdurchlässigkeit des Mantelteils bei einem mittleren Verhältnis von 2:1 oder 1:2 zwischen der Spannung in Richtung der Kettfäden zur Spannung in Richtung der Schußfäden bis mindestens etwa 40 kPa auf höchstens etwa 1,5 m³/s·m² anwächst.

3. Gassack nach Anspruch 1 oder 2, dadurch gekennzeichnet, daß die Gasdurchlässigkeit der von dem Fahrzeuginsassen abgewandten Gewebeteile nach Erreichen eines Maximums in einem Bereich zwischen etwa 10 kPa und etwa 20 kPa des Innenüberdrucks deutlich absinkt.

4. Gassack nach einem der vorstehenden Ansprüche, gekennzeichnet durch ein Gewebematerial, dessen Gasdurchlässigkeit bei statischer Druckbeaufschlagung mit einer Druckdifferenz von etwa 500 Pa mehr als 12 l/min·dm² beträgt.

5. Gassack nach einem der vorstehenden Ansprüche, gekennzeichnet durch ein Gewebematerial, dessen Gasdurchlässigkeit bei einseitiger Druckbeaufschlagung während einer Dauer von etwa 150 ms bis zu einem Überdruck von höchstens etwa 20 kPa auf ein Maximum von mehr als 2 m³/s·m² anwächst, anschließend deutlich absinkt und bis zu einem Überdruck von etwa 40 kPa zumindest nicht wesentlich zunimmt.

6. Gassack nach einem der vorstehenden Ansprüche, dadurch gekennzeichnet, daß zumindest ein Teil des zur Herstellung des Gewebematerials verwendeten Filamentgarns aus Hohlfasern besteht.

## Claims

1. A gas bag for a vehicular restraining system, generally balloon-shaped or cushion-shaped in its inflated condition and having an envelope of uncoated fabric, comprising two fabric sections, one of which faces the vehicle occupant, the other facing away from said occupant, wherein both fabric sections comprise the same type of fabric as determined by thread density and filament yarn, the gas permeability of which differs in the various zones and is determined by differing weaving parameters of the fabric, characterized in that depending on the pressure above atmospheric within the gas bag for the duration of its expansion and subsequent compression as well as for an average ratio of 1:1 between the tension in the direction of the warp threads and the tension in the direction of the weft threads:
a) the gas permeability of the fabric section facing away from said vehicle occupant with a pressure up to at most approx. 20 kPa above atmospheric increases to a maximum of more than 2 m³/s·m² and up to a pressure of approx. 40 kPa above atmospheric does not significantly increase;
b) the gas permeability of the fabric section facing the vehicle occupant up to at least 40 kPa increases to not more than 1.5 m³/s·m².

2. Gas bag for vehicular restraining system having an envelope of uncoated fabric having three fabric sections the first of which in its inflated condition forms a generally cylindrically shaped envelope section and the other two form side sections, wherein all fabric sections comprise the same type of fabric as determined by thread density and filament yarn, the gas permeability of which differs in the various zones and is determined by differing weaving parameters of the fabric, characterized in that depending on the pressure above atmospheric within the gas bag for the duration of its expansion and subsequent compression:
a) the gas permeability of said side sections for an average ration of 1 to 1 between the tension in the direction of the warp threads and the tension in the direction of the weft threads up to a pressure of not more than approx. 20 kPa above atmospheric increases to a maximum of more than 2 m³/s·m² and up to a pressure of approx. 40 kPa above atmospheric does not significantly increase; and
b) the gas permeability of the envelope section for an average value of 2 to 1 or 1 to 2 between the tension in the direction of the warp threads and the tension in the direction of the weft threads up to at least approx. 40 kPa above atmospheric increases to a maximum of not more than 1.5 m³/s·m².

3. Gas bag as set forth in claims 2 or 3, characterized in that the gas permeability of the fabric zones facing away from the vehicle occupant decreases significantly after reaching a maximum in a pressure range between approx. 10 kPa and approx. 20 kPa above atmospheric within the gas bag.

4. Gas bag according to one of the proceding claims, characterized by a fabric, the gas permeability of which amounts to more than 12 l/min·dm² for a static pressure application having a difference in pressure of 500 Pa.

5. Gas bag according to one of the preceding claims, characterized by a fabric, the permeability of which when subjected to one-sided pressure with a pressure of not more than 20 kPa above atmospheric for a duration of approx. 150 ms increases to a maximum of more than 2 m³/s·m², subsequently decreases significantly and up to a pressure of approx. 40 kPa above atmospheric does not at least significantly increase.

6. Gas bag according to one of the preceding claims, characterized in that at least part of the filament yarn used for its fabrication is made up of hollow fibers.

## Revendications

1. Coussin gonflable de protection pour un système de retenue dans des véhicules automobiles, généralement en forme de ballon ou de coussin à l'état gonflé et comportant une paroi faite d'un tissu non enduit, qui présente deux parties de tissu dont une est tournée vers le passager et l'autre à l'opposé de celui-ci, les deux parties de tissu étant réalisées dans le même type de tissu déterminé par la compacité des fils et le fil continu dont la perméabilité aux gaz, différente dans les différentes zones, est déterminée par des paramètres de tissage différents, caractérisé en ce qu'en fonction de la surpression régnant à l'intérieur du coussin gonflable de protection pendant la durée de son expansion et de la compression qui s'ensuit ainsi que dans le cas d'un rapport moyen de 1 à 1 entre la tension en direction des fils de chaîne et la tension en direction des fils de trame :
a) la perméabilité aux gaz de la partie de tissu tournée à l'opposé du passager augmente pour passer à un maximum de plus de 2 m³/s.m², jusqu'à une surpression d'environ 20 kPa au maximum, et n'augmente pratiquement pas, jusqu'à une surpression d'environ 40 kPa ; et
b) la perméabilité aux gaz de la partie de tissu tournée vers le passager augmente pour passer à environ 1,5 m³/s.m² au maximum, jusqu'à au moins environ 40 kPa.

2. Coussin gonflable de protection pour un système de retenue dans des véhicules automobiles, avec une paroi faite d'un tissu non enduit, qui comporte trois parties de tissu, dont la première forme, à l'état gonflé du coussin gonflable de protection, une partie d'enveloppe généralement cylindrique et les deux autres forment des parties de côté, toutes les parties de tissu étant réalisées dans le même type de tissu, déterminé par la compacité des fils et le fil continu, dont la perméabilité aux gaz, différente dans les différentes zones, est déterminée par différents paramètres de tissage, caractérisé en ce qu'en fonction de la surpression régnant à l'intérieur du coussin gonflable de protection pendant la durée de son expansion et de la compression qui s'ensuit :
a) la perméabilité aux gaz des parties de côté, pour un rapport moyen de 1 à 1 entre la tension en direction des fils de chaîne et la tension en direction des fils de trame, augmente pour passer à un maximum de plus de 2 m³/s.m², jusqu'à une surpression d'environ 20 kPa au maximum, et n'augmente pratiquement pas, jusqu'à une surpression d'environ 40 kPa ; et
b) la perméabilité aux gaz de la partie d'enveloppe, pour un rapport moyen de 2 à 1 ou de 1 à 2 entre la tension en direction des fils de chaîne et la tension en direction des fils de trame, augmente pour passer à un maximum d'environ 1,5 mm³/s.m², jusqu'à au moins environ 40 kPa.

3. Coussin gonflable de protection selon la revendication 1 ou 2, caractérisé en ce que la perméabilité aux gaz des parties de tissu tournées à l'opposé du passager diminue nettement après obtention d'un maximum dans une plage comprise entre environ 10 kPa et environ 20 kPa de surpression intérieure.

4. Coussin gonflable de protection selon l'une des revendications précédentes, caractérisé par un type de tissu dont la perméabilité aux gaz, dans le cas d'une action statique de la pression avec une différence de pression d'environ 500 Pa, est supérieure à 12 l/min.dm².

5. Coussin gonflable de protection selon l'une des revendications précédentes, caractérisé par un type de tissu dont la perméabilité aux gaz, dans le cas où la pression agit d'un côté, pendant une durée d'environ 150 ms, jusqu'à une surpression d'environ 20 kPa au maximum, croît jusqu'à un maximum de plus de 2 m³/s.m², puis diminue nettement et n'augmente jusqu'à une surpression d'environ 40 kPa au moins pratiquement pas.

6. Coussin gonflable de protection selon l'une des revendications précédentes, caractérisé en ce qu'une partie au moins du fil continu utilisé pour la fabrication du type de tissu est faite de fibres creuses.
